(19) Europäisches Patentamt
European Patent Office
Office européen des brevets

(11) **EP 2 642 677 A1**

(12) **EUROPEAN PATENT APPLICATION**

(43) Date of publication:
**25.09.2013 Bulletin 2013/39**

(51) Int Cl.:
**H04J 14/02** (2006.01)

(21) Application number: **12305344.9**

(22) Date of filing: **23.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Morea, Annalisa**
**91140 Nozay (FR)**

• **Rival, Olivier**
**92340 Bourg la Reine (FR)**

(74) Representative: **MERH-IP**
**Matias Erny Reichl Hoffmann**
**Paul-Heyse-Strasse 29**
**80336 München (DE)**

Remarks:
Amended claims in accordance with Rule 137(2) EPC.

(54) **Method of operating a communication network and network node**

(57)      The invention relates to a method of operating a communication network (1) comprising a plurality of network nodes (2) and a plurality of optical network links (3). The method comprises: A) defining, in a network path within the communication network (1), a network path subsection, wherein the network path comprises a network path source node (S), a network path destination node (D), and at least two of the network links (3) connecting the network path source node (S) with the network path destination node (D), and wherein the network path subsection comprises a network path subsection starting node (5), a network path subsection ending node (6), and at least one of the network links (3) connecting the network path subsection starting node (5) and the network path subsection ending node (6), wherein the network path subsection starting node (5) is located closer to the network path source node (S) than the network path subsection ending node (6); B) determining the influence of the network links (3) between the network path subsection starting node (5) and the network path subsection ending node (6) on a quality of a signal propagating from the network path subsection ending node (6) to the network path subsection starting node (5); and C) determining whether the influence exceeds a predetermined threshold value, wherein, if it is determined that the influence does exceed the predetermined threshold value, configuring the node prior to the network path subsection ending node (6) to be perform signal regeneration.

Fig. 4C

**Description**

FIELD OF THE INVENTION

The invention relates to the technical field of optical communication systems comprising a plurality of network nodes and a plurality of optical network links, wherein the network nodes are connected with each other by the optical network links.

BACKGROUND

Optical networks have been evolving toward increased levels of flexibility and automation for improved cost efficiency. Generalized Multi-Protocol Label Switching (GMPLS) is an adopted protocol architecture to enable such automation and thus reduce the need for human intervention, thereby reducing overall maintenance cost.

In an opaque network (with optoelectronic - optical-electrical-optical (OEO) - conversions performed systematically at each intermediate node of a path), the only constraint that needs to be checked to route a connection request is resource availability on each link and each node of a candidate path. The constraining resources of links are wavelengths slots (typically 80 to 100 in Dense Wavelength Division Multiplexing (WDM) systems), and the constraining resources of nodes are OEO devices and ports.

On the other hand, transparent networks allow bypassing unnecessary OEO conversions at intermediate nodes of a light path. This reduces costs and increases energy efficiency of the network, but sets a number of additional constraints on the eligibility of a path for a connection request. Beside a wavelength continuity constraint whenever an OEO conversion is bypassed, the most important constraint on candidate paths for a request is on the quality of the optical signal at the receiver. The optical signal travels through several links and nodes without the benefit of OEO conversion (and associated error correction). During such propagation optical signals accumulate a number of physical impairments such as Amplified Spontaneous Emission (ASE) noise, chromatic dispersion and nonlinear degradations due to the Kerr effect.

In automatically switched optical networks (ASON), it is therefore beneficial to estimate the quality of an optical signal (typically, the expected bit error rate (BER) at the egress) prior to the actual set-up of the connection and to allocate OEO (i.e. repeater functionality) along the path if this quality is deemed too low. The element of the network control plane in charge of this decision may be a Path Computation Element (PCE). In order to carry out this function, a description of the different elements of the network and their respective contribution to physical impairments may be broadcast through the network so that the PCE can associate a path and the number of resources (wavelength and regenerators when necessary) to a connection request.

The present document is directed to the technical problem of determining the placement of regenerator resources for bidirectional transmissions when performance asymmetry can be expected between the two directions of a light path.

SUMMARY

In an embodiment, a method of operating a communication network is provided, the communication network comprising a plurality of network nodes and a plurality of optical network links, wherein the network nodes are connected with each other by the network links. The network may be an automatically switched optical network.

The method comprises a first step A) of defining, in a network path within the communication network, a network path subsection. The network path may be determined by a routing protocol such as GMPLS and comprise a network path source node, a network path destination node, and at least two of the network links connecting the network path source node with the network path destination node. The network links connecting the network path source node with the network path destination node may form a concatenation of network links. A signaling message (or control signal) may travel through the network from the network path source node to the network path destination node, and the method may be performed in the network nodes when the signaling message reaches a node.

The network path subsection comprises a network path subsection starting node, a network path subsection ending node, and one or more of the network links (or a concatenation of at least two of the network links) connecting the network path subsection starting node and the network path subsection ending node with each other. The network path subsection starting node is typically located closer (in the sense of number of hops on the network path) to the network path source node than the network path subsection ending node. A subsection corresponds to transparent section of the network where there are no regenerators within the subsection, only at the ends thereof.

Step B) of the method relates to determining the influence of the network links between the network path subsection starting node and the network path subsection ending node, in the order of the links from the network path subsection ending node to the network path subsection staring node, on a quality of a (hypothetical) signal propagating from the network path subsection ending node to the network path subsection starting node. The signal quality reflects impairments caused by the network links on the signal such as ASE noise, chromatic dispersion and/or nonlinear degradations due to the Kerr effect. These impairments may impact the signal strength, signal power, or other physical signal parameters which can cause data errors. The determination of link influence may be an estimation based on characteristic parameters of the network links stored in the network nodes. Preferably, separate characteristic parameters for both signal directions are provided.

In step C) it is determined (e.g. in a subsection end node) whether the influence exceeds a predetermined threshold value. If it is determined that the influence does exceed the predetermined threshold value, regeneration is needed within the network path subsection because a signal would be severely degraded when traveling from the network path subsection ending node to the network path subsection starting node. Thus, it is determined that the node on the network path sub-section prior to the network path subsection ending node is a repeater or regenerator node. The prior node of the subsection may then be configured to perform a signal regeneration function. It should be noted that in the present description both terms are used synonymously.

The method may further include setting the node prior to the network path subsection ending node (i.e. the selected repeater node) to become the new network path subsection starting node, and shifting the network path sub-section ending node by at least one network link towards the network path destination node. The process of the method may thus continue at the next network path subsection ending node.

Using this method, it is possible to determine, while successively collecting information about the influence of network links on communication signals in a node-by node manner in a direction pointing from the network path starting node to the network path destination node, a distribution of repeater functionality (i.e. the locations of network nodes which comprise enabled repeater functionality) necessary to ensure that communication signals propagating from the network path destination node to the network path source node (i.e. in the opposite direction as the information collecting direction) are not severely degraded. Thus, using this method, although the influences of all network links are not known in advance, it is nevertheless possible to determine the distribution of repeater functionality step by step along with the signaling message traveling through the network, even though some of the nonlinear effects are not commutative, i.e. the accumulation of the signal impairments must consider the order of the signal traveling through the network links.

In embodiments, if it is determined in step C) that the influence does not exceed the predetermined threshold value, it is decided that the node prior to the network path subsection ending node must not perform a signal regeneration function (i.e. is not a repeater node). Further, the network path subsection starting node is maintained, and the network path subsection ending node is shifted by at least one network link towards the network path destination node.

In embodiments, steps B) and C) are repeated until the network path subsection ending node coincides with the network path destination node. In this way, a repeater functionality distribution along the whole network path can be established in one pass along with the signaling message traveling through the network.

In embodiments, the method further comprises determining, in step B), the influence of the network links between the network path subsection starting node and the network path subsection ending node in this order on a quality of a signal propagating from the network path subsection starting node to the network path subsection ending node. If it is determined in step C) that the influence does not exceed a further predetermined threshold value, it is decided in step C) that the node prior to the network path subsection ending node is not a repeater node. If it is determined in step C) that the influence does exceed the further predetermined threshold value, the following acts may be carried out in step C): configuring the node prior to the network path subsection ending node to perform a signal regeneration function, setting the network path subsection starting node to become the node prior to the network path subsection ending node, and shifting the network path subsection ending node by at least one network link towards the network path destination node.

In embodiments, the predetermined threshold value and the further predetermined threshold value are identical. This allows impairments in both directions to be judged equally. If different thresholds are applied, particular emphasis to impairments in one direction can be made.

In embodiments, in step C), the number of the network links by which the network path subsection ending node is shifted towards the network path destination node is one. In other embodiments, the network path subsection ending node is shifted by multiple links at once. Thus, the process of determining placement of repeater nodes is faster but less accurate.

In embodiments, in order to determine the influence of the network links between the network path subsection starting node and the network path subsection ending node on a signal propagating from the network path subsection ending node to the network path subsection starting node or propagating from the network path subsection starting node to the network path subsection ending node, link influence information is successively collected from the network nodes along the network path, starting from the network path subsection starting node towards the network path subsection ending node. The link influence information (also called signal history) may be carried in the signaling message.

In embodiments, steps B) and C) are carried out each time when link influence information of a network node is changed or newly read out. This allows determining a new repeater distribution when the network parameters change.

In embodiments, the link influence information assigned to a link reflects physical properties of the link. Preferably, the link influence information reflects physical properties of the link which are necessary to calculate nonlinear impairments for one or both signal directions. The link influence information may include signal power and chromatic dispersion of network links. In embodiments, the link influence information has different entries for each signal propagation direction.

In an embodiment, a network node is provided comprising an input unit, a processing unit coupled to the input unit, and an output unit coupled to the processing unit. The input unit is connectable to a first optical network link, and the output unit is connectable to a second optical network link of a communication network. The input unit is adapted to receive a control signal (or signaling message) from the first optical network link. The control signal may comprise path information which indicates a network path within the communication network along which the control signal is to be routed. The information on the network path may however be received differently. The network node, the first optical network link and the second optical network link may be part of the signal path. The control signal comprises information which indicates influence of network links of a network path subsection, which have already been passed by the control signal but which are not directly connected to the network node, on a quality of a signal propagating along the signal path in a direction being opposite to the propagating direction of the control signal. This information is also called signal history information.

The processing unit is adapted to determine the influence of a network link of the network path directly connected to the network node, on the quality of a (hypothetical) signal propagating along the signal path in a direction being opposite to the propagating direction of the control signal. If an accumulated influence of network subsection links including the link directly connected to the node on the signal exceeds a predetermined threshold value, the processing unit determines the node prior to the network node in the network path to be a repeater node. Thus, an indication is made in the network that the prior node should perform a signal regeneration function. The accumulated influence of network subsection links is estimated under consideration of the signal propagation direction, i.e. accounting for impairments on links from the network node, via the prior node, towards the starting node of the network subsection.

The processing unit is further adapted to process the control signal by correspondingly updating the information indicating the link influence, and the output unit is adapted to output the processed control signal to the second optical network link. Preferably, the processing unit issues a signaling message to indicate that the prior node should perform a signal regeneration function. The signaling message may be sent directly to the prior node, or to a central network management unit.

If the accumulated influence of network subsection links on the quality of the signal exceeds the predetermined threshold value, the processing unit may clear the information of the control signal indicating the link influence (i.e. the signal history information) and include only information which indicates the influence of the network link directly connected to the network node. Thus, if it is decided that the prior node should provide signal regeneration functionality, a new network subsection (i.e. a new transparent subsection) is generated including signal impairment information for the link between the prior node and the network node.

In embodiments, the control signal comprises information which indicates an accumulated influence of network links of the network subsection, which have already been passed by the control signal but which are not directly connected to the network node, on a quality of a signal propagating along the signal path in the same direction as the control signal. The processing unit may be adapted to determine the influence of a network link of the network path directly connected to the network node, on the quality of the signal propagating along the signal path in the same direction as the control signal. The processing unit may further be adapted to process the control signal by correspondingly updating the information indicating the accumulated influence. If an accumulated influence of subsection links including the link directly connected to the network node on the quality of the signal exceeds a further predetermined threshold value, the processing unit determines the previous node on the network path to the network node to be a repeater node. The processing unit may further process the control signal by resetting the information of the control signal indicating the accumulated influence by clearing signal impairment information for links before the prior node.

In an embodiment, a computer program product is provided comprising computer program means adapted to carry out any method step or adapted to embody any part of the network node when being carried out on a computing device.

BRIEF DESCRIPTON OF THE DRAWINGS

These and other aspects of the invention will be apparent from and elucidated with reference to the embodiments described hereinafter, by way of example, with reference to the drawings.

Fig. 1    shows parameters characterizing a communication signal at different network nodes of a network path when propagating from a network path source node to a network path destination node.

**Fig. 2**          shows parameters characterizing communication signals at different network nodes when propagating along a network path from a network path source node to a network path destination node, and vice versa.

**Fig. 3**          shows a process of collecting link influence information from network nodes of a network path when propagating from a network path source node to a network path destination node, or vice versa.

**Figs. 4A to 4G**    show steps of a method of operating a communication network according to an embodiment of the present invention.

**Fig. 5**          shows a schematic drawing illustrating a network node according to an embodiment of the present invention.

While a plurality of embodiments are described below, it is clear to a person skilled in the art that individual features from more than one embodiment may be combined and that the disclosure of the present document extends to every possible combination of features described in conjunction with the embodiments. In particular, features disclosed in combination with an example method may also be combined with embodiments relating to an example system or device and vice versa.

In communication networks, often the situation arises that a new network path must be determined and provisioned, for example, if a failure occurs on a network path comprising a network path source node, a network path destination node and a concatenation of several network links connecting the network path source node with the network path destination node typically via intermediate nodes. In this case, a new network path connecting the network path source node with the network path destination node has to be determined. There are many other reasons for the determination of a new path in an optical network, in particular in automatically switched optical networks (ASON) and in combination with Generalized Multi-Protocol Label Switching (GMPLS).

Usually, at least some of the network nodes along the network path comprise repeater or regenerator functionality which can be enabled or disabled on demand. If regenerator functionality is enabled in a network node, communication signals propagating along the network path from the network path source node to the network path destination node are amplified when passing the network node. Further functions such as error correction may be performed in a repeater or regenerator node. However, the number of repeaters in the network should not be too high in order to avoid unnecessary usage of resources and power consumption. On the other hand, it has to be ensured that repeating functionality is enabled in enough network nodes in order to avoid the case that the signal suffers severe impairments and the quality or power of the optical communication signal level falls below a particular threshold value, which could eventually result in data loss. In other words, the objective of the network design is to deploy just enough repeaters (i.e. a minimum number of repeaters), and that these repeaters are deployed at suitable places in the network.

The locations of the network nodes along the network path comprising repeater functionality depend on the individual influences of the optical network links on the communication signals. For example, if the optical network links (e.g. the optical fibers) along the network path have a strong attenuation effect on the communication signals, repeating functionality should be enabled in more network nodes than in the case where the optical network links only have a small influence on the communication signal. Other physical impairments include Amplified Spontaneous Emission (ASE) noise, chromatic dispersion (CD) and nonlinear degradations due to the Kerr effect.

Each time a network path is chosen, it has to be therefore determined in which network nodes along the network path repeater functionality should be enabled. Since in most cases communication signals do not only propagate from the network path source node to the network path destination node, but also in reverse direction from the network path destination node to the network path source node, a problem arises, as an optimized distribution of repeating functionality over the network nodes of the network path for one propagation direction of a communication signal does usually not constitute an optimal distribution of repeater functionality for a communication signal propagating along the opposite direction. This problem may occur, for example, if different optical fibers, amplifiers, connectors, etc. are used within an optical network link for different communication signal propagation directions.

In the following description, aspects of embodiments will be discussed. These embodiments are applicable e.g. to systems and methods for propagating information with 100Gb/s using PDM-QPSK, and provide a solution for placement of regenerator resources for bidirectional transmissions when performance asymmetry can be expected between the two directions of a light path.

In a bidirectional routing it has to be considered that the two optical signals propagate in different optical elements. There may be a different set of fibers, amplifiers, connectors, etc. for each direction. Therefore, it is not likely that these elements have the same characteristics in terms of physical impairments for both directions. Even assuming those characteristics are identical for both directions, the overall amount of distortions experienced by optical signals of different directions may depend on the order in which the various elements are crossed, this order being different for the two directions of a given path.

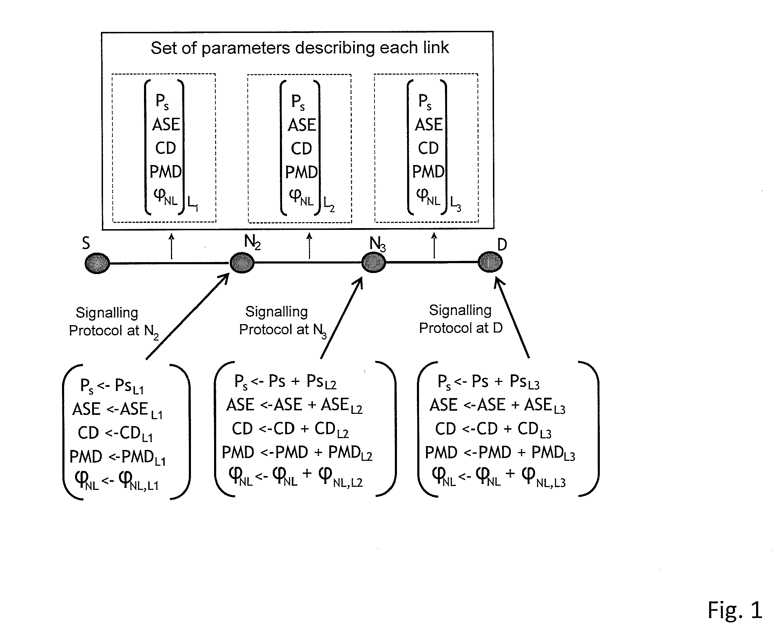

In order to implement path computation and regenerator placement, in embodiments, a PCE may first compute the path without any knowledge of physical impairments. Regenerator placement is then determined during a signaling process for resource reservation ("Blind PCE"), as for example shown in Fig. 1.

Fig. 1 shows an example of a set of physical parameters propagated by the signaling protocol from source to destination to estimate the physical impairments caused by the individual optical links. The parameters include the power $P_s$ of the optical signal, the Amplified Spontaneous Emission noise ASE, the chromatic dispersion CD, Polarization Mode Dispersion PMD, and the nonlinear phase $\varphi_{NL}$. The figure further illustrates conditions at the nodes that must be met for reliable signal propagation.

In impairment-aware PCE, the PCE computes the path and physical degradation simultaneously based on the state of the network and a database describing the physical characteristics of all networks elements (OSPF database).

Blind PCE allows a more distributed network management, but may run into problems if tools used for physical performance estimation require a history of impairment accumulation. Another issue of Blind PCE concerns the regenerator placement in the case of bidirectional routing (i.e. when optical signals propagate in both directions of a path). In this case, the regeneration resources have to be placed at the same place for both directions even if only one of the two signals suffers severe degradations.

Physical degradations are usually different for the signals propagating on the same path but along the two opposite directions. Typically, signaling is performed from one end of the connection (light path) to the other, collecting information about physical impairments at each intermediate node for both directions. Regenerators are typically placed for both directions as soon as a feasibility limit for signal propagation is reached for one direction.

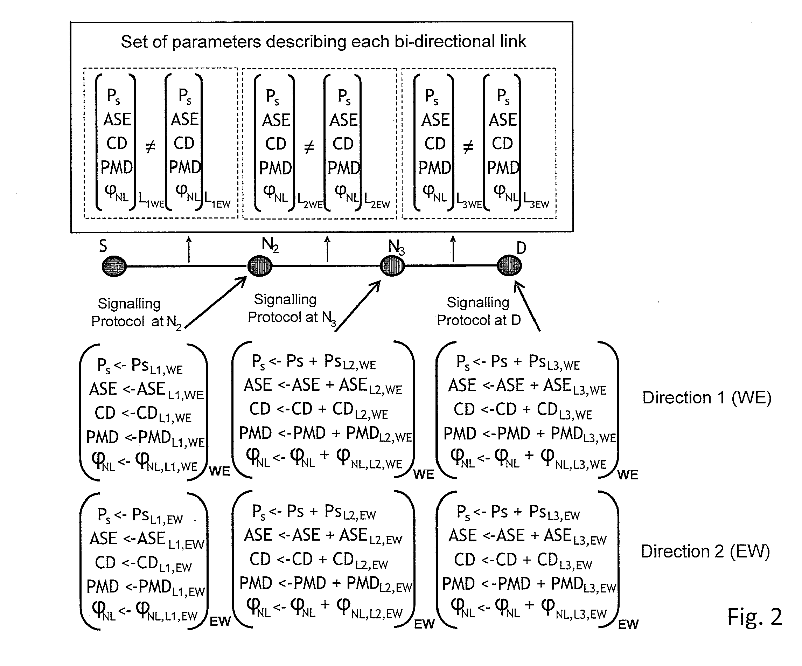

Fig. 2 shows an example of two sets of physical impairment parameters propagated by the signaling protocol from source to destination to estimate the physical impairments relative to the two directions (direction 1, West-East (WE); and direction 2, East-West (EW)). The figure further illustrates the conditions at the nodes that must be met for reliable signal propagation in both directions.

Regenerator placement criteria may be:

(1) For each pair of optical elements (e.g. a pair of fiber in a bidirectional optical network link), each physical impairment is described by the worst case of the two directions;
(2) For each pair of optical elements (e.g. a pair of fiber in a bidirectional optical network link), each physical impairment is described by the weighted average of the values for the two directions;
(3) For each pair of optical elements (e.g. a pair of fiber in a bidirectional optical network link), each physical impairment is described by separate values for each direction.

Approaches (1) and (2) require less information than approach (3), i.e. only one set of parameters per link has to be propagated; while approach (3) requires two sets of information (one per direction). But approaches (1) and (2) may cause inaccurate performance estimation and require unnecessary margins (and thus unnecessary regenerators).

In approach (3), the feasibility of signal propagation for both directions may be checked simultaneously, accumulating impairment values in the direction of propagation for direction 1 (WE), and starting from the end of the light path for direction 2 (EW). This is accurate only if performance estimation does not rely on the order of optical elements along the link, which is generally fairly accurate in dispersion managed systems, where each type of impairment is cumulated in an additive manner without interdependencies between different types of impairments. In systems without dispersion management, such approaches may be inaccurate due to the dependence of generated nonlinear distortions on the cumulated chromatic dispersion.

On the other hand, if such inaccuracy should be avoided, approach (3) may be used, performing a signal propagation feasibility test in one direction followed by a signal propagation feasibility test for the other direction. This is naturally more accurate but slows down the path set-up process time. As one direction presents a too high signal impairment at a node (e.g. resulting in high BER), regeneration is placed at this node. The main advantage of approach (3) is the precision of physical estimations for both directions. Further, the number of regenerators is minimized, making the solution cost effective, even if slower (two signal propagation feasibility tests) and two sets of physical information have to used and propagated in the network.

In the light of the above, an approach for minimizing the number of regenerators associated to a connection in asymmetric connections without compromising the set-up time of a connection is proposed in the following.

The basic challenge in performance estimation in asymmetric links is that performance estimation requires some information about the history of the signal (which is equivalent to saying there is some interdependencies between different types of impairments, e.g. cumulated chromatic dispersion and nonlinear distortions). This is problematic when collecting information in the reverse order to the propagation direction of the signaling. Hence, among the before-mentioned signaling methods for regenerator placement approach (3) should be used in this case. But for a successful use of this method, if e.g. implemented in a GMPLS managed system, a concept of history has to be introduced and considered during the bidirectional information flooding, taking into account the minimum amount of information that needs to be collected for the direction that is opposite to the signaling.

In general, one can assume that an optical signal is impacted by N types of impairments, for simplicity in the following it is assumed N=2. Suppose that the two impairments are X and Y and that they cumulate as follows from element t-1 to element t:

$$X_t \leftarrow X_{t-1} + A_t.g(Y_{t-1}) \qquad \qquad (Eq. 1)$$

$$Y_t \leftarrow Y_{t-1} + \text{delta } Y_t$$

where g is an increasing function of Yt, and At and delta Yt are non-negative. A connection is deemed feasible as long as:

$$X < X_{Threshold}$$
$$Y < Y_{Threshold}$$

A brute force method to estimate performance in both directions is to collect all values of At and delta Yt. In this case the physical performance is computed at the destination node after collecting all link information about bidirectional physical impairments. Only at the destination node, the regenerator placement is computed and if any regenerator is required, a reservation message has to be sent to the respective nodes. The risk of this procedure is that in the meanwhile another connection can reserve/use such device and an error message is sent for lack of available regenerators. Hence a new regeneration placement procedure has to be performed, slowing down the set-up of the new connection. An additional drawback of this solution is to collect of a large number of link information for both directions, slowing down the signal propagation feasibility test process.

According to embodiments, regeneration reservation is done during signaling message propagation, so as to minimize the set-up time of the new connection (path). To speed up the signal propagation feasibility computation time, the number of transported information is reduced, thereby reducing the number of elements that processors have to handle for the feasibility test. The number of collected elements to account for the signal impairment history may depend on the propagation direction: only one set of history elements is needed for the description of the signal propagating on the same direction as the signaling; for the reverse direction, the set of elements is proportional to the length of a transparent section over which the signalization is done.

In the following, an example implementation for non dispersion managed systems is described, where nonlinear impairments accumulated over a fiber section (also referred to as transparent section or network path subsection) depend on the amount of cumulated chromatic dispersion up to the beginning of the section.

In the notation of equation (1), X refers to NL (nonlinear impairments) while Y refers to CD (chromatic dispersion).

A physical estimator may estimate the signal propagation feasibility (or BER) considering four physical impairments describing the link. This method is cumulative and GMRE/GMPLS compatible. Denoting a generic link by k, in this embodiment, as an example, four physical impairments are used to estimate the physical feasibility: $OSNR_k$, $CD_k$, $P_k$ and $A_{0,k}$, where $P_k$ denotes the signal power on link k, and $A_{0k}$ is a coefficient that describes the amount of nonlinear distortions generated by a network element (typically a fiber span) for a reference value of cumulated chromatic dispersion (e.g. 0ps/nm). $A_{0k}$ typically depends on the fiber type and fiber length.

The physical feasibility is guaranteed if $OSNR_{tot} > OSNR_{Threshold}$, $CD_{tot} < CD_{Threshold}$, and $NL_{tot} < NL_{Threshold}$.

$OSNR_{tot}^{-1}$ and $CD_{tot}$ cumulate by adding the $OSNR^{-1}$ and CD values along all the links composing a transparent section. No history is required because the accumulation relies on the commutative property and the lack of interdependency with other impairments.

PMD is another typical impairment that is generally accounted for in GMPLS networks. It is particular important for 10Gb/s and 40Gb/s non-coherent systems, and the accumulation rule for this impairment is to sum the square of the PMD contributions of each network element. It may still be considered in new generation systems (40 & 100Gb/s coherent systems).

The nonlinear phase $\varphi_{NL}$ is another parameter that is typically used for 10Gb/s networks. This parameter can be summed over the different network element composing a light path, yielding the same result regardless of the order of the summation. It is a good metrics for the impact of nonlinear distortions in dispersion-managed 10Gb/s systems.

$NL_{tot}$ depends on $NL_{prev}$ and $CD_{prev}$ observed on the previous link by the following equation:

$$NL_{tot} = NL_{prev} + A_{0,k}.P_k^2.g(CD_{prev}). \qquad \qquad (Eq. 2)$$

In embodiments, $NL_{prev}$ and $CD_{prev}$ are the two parameters describing the propagation history.

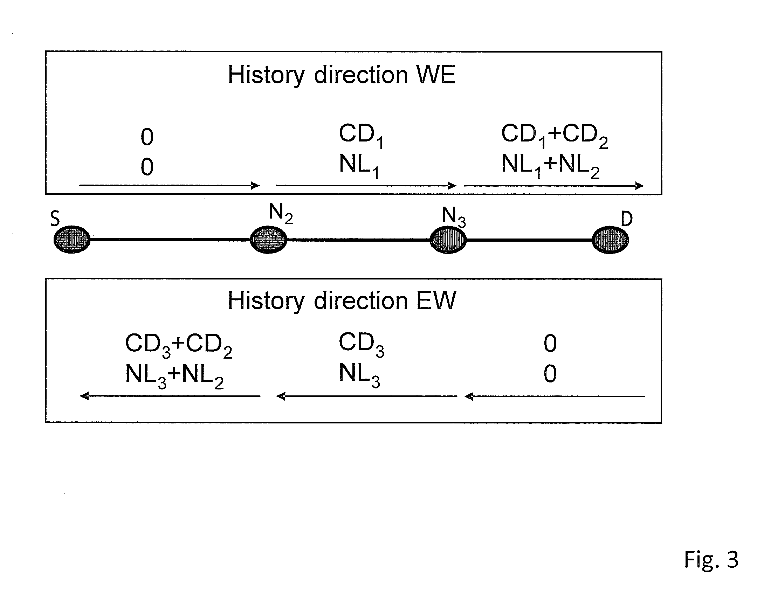

For the signal propagating along the same direction than the signaling, a feasibility test is straightforward because $NL_{prev}$ and $CD_{prev}$ are known at the time $NL_{tot}$ needs to be estimated. But such information about the complete history is not available for the other direction. An example of this incomplete history knowledge during the signalization process is depicted in Fig. 3.

In Fig. 3, the cumulated history values are presented for a transparent connection between nodes S and D. If a signaling protocol collects information from S to D, it can be observed that at node $N_2$ the CD and NL history of direction 2 (EW) cannot be estimated because information about the links connecting $N_2$-$N_3$ ($CD_2$) and $N_3$-D ($CD_3$) have not been collected. The same phenomenon happens at node $N_3$: No information is available about ($CD_3$). At node D information about the accumulated effects (and history) of the signal propagating from S to D is available, but no information about what happens along the other direction.

In the following, it is assumed that g ($CD_{prev}$) is an non- negative increasing function of $CD_{prev}$. Furthermore, in non dispersion managed networks, CD also grows with the travelled distance. Thus, the following inequalities hold: If $CD_1 > CD_2$, then g ($CD_1$) > g ($CD_2$), and if $NL_1 > NL_2$ then $NL_1 + A_{0,k} \cdot P_k^2 \cdot g (CD_1) > NL_2 + A_{0,k} \cdot P_k^2 \cdot g (CD_2)$ .

The test of the physical feasibility for signal propagation along the two directions is done link by link. As transparent section, a concatenation of links is defined, with OEO (i.e. regenerator) devices only at the end points.

It is supposed that OEO conversions are placed at the beginning of the first link (source of the transparent section, network path subsection starting node) and at the end of the last link (destination of the transparent section, network path sub-section ending node).

To compute the physical feasibility of a connection, the feasibility test considers the following conditions:

$$OSNR_{tot} > OSNR_{Threshold},$$

$$CD_{tot} < CD_{Threshold}, \qquad\qquad \text{(Conditions 1)}$$

$$NL_{tot} < NL_{Threshold}$$

A signal history list is required only for the direction contra-propagating with the signaling message. The signal history may store a pair of information: (i) the type of travelled fibers and the power of the signals traveling on them (this information is given by the product $A_{0k}$ and $P_k$), given by the parameter AP; and (ii) the cumulated chromatic dispersion (CD) with which the signal starts its propagation along a link.

The procedure used to check the physical feasibility of a connection and place regenerators may use the following steps:

0. Select a candidate path (e.g. through OSPF). Create a transparent section within the candidate path including the candidate path source node.

1. Initialize the signal history list for the (EW) direction contrary to the (WE)- signaling direction: $CD_{prev, EW} = 0$, $AP_{prev,EW} = 0$ , and initialize cumulated physical impairments along the two directions ($OSNR_{tot}^{-1}$, $CD_{tot}$ and $NL_{tot}$) to zero.

2. Add a new link ($N_{t-1}$, Nt) to the transparent section.

3. During the signaling process, propagate the signal history lists from node $N_{t-1}$ to the new end node of the transparent section (Nt), wherein the cumulated physical impairments ($OSNR_{tot}^{-1}$, $CD_{tot}$ and $NL_{tot}$) act on the signal.

4. At node Nt collect the impairments ($OSNR_k^{-1}$, $CD_k$) acting on the link k, the fiber characteristics $A_{0k}$ and the power $P_k$ on the link k, and the signal history list.

5. Update the accumulated physical impairments acting on the signal up to the node $N_t$.

a) $OSNR_{tot}^{-1} \leftarrow OSNR_{tot} 1 + OSNR_k^{-1}$
b) $CDprev \leftarrow CD_{tot}$ ; $CD_{tot} \leftarrow CD_{tot} + CD_k$
c) NL is computed in a different manner for the two directions:

- for the (WE) direction co- propagating with the signaling, $NL_{tot}$ is computed by considering the propagated $NL_{tot}$ and $CD_{prev}$, and the collected $AP_k$

  N Ltot $\leftarrow$ N Ltot + $A_{0,k}$. $P_k^2$.g ($CD_{prev}$)
- for the (EW) direction contra-propagating with the signaling, $NL_{tot}$ is computed using the information propagated by the signal history list (i.e. AP and CD) having n elements (with n the number of nodes belonging to the transparent section):

  Initialize $NL_{index}$= 0 and $CD_{tot2}$=0, AP=$AP_k$.
  for (index = n : 1)
  $NL_{index} \leftarrow$ NLindex+AP·g ($CD_{tot2}$)
  $CD_{tot2} \leftarrow CD_{tot2}$+CD [index]
  AP$\leftarrow$ AP [index- 1]
  N Ltot $\leftarrow$ N $L_{index}$

6. Check the performance feasibility for both directions:
   If for at least one direction the conditions (conditions 1) are not satisfied: go to step 7, else go to step 8.

7. The new link cannot be added to the transparent section. A regenerator has to be placed at node $N_{t-1}$. A new transparent section is created having as source the regeneration node $N_{t-1}$. Reserve a regenerator at node $N_{t-1}$. Go to step 1.

8. Update the signal history list of propagation information for the two directions, as follows: For the (WE) direction co-propagating with the signaling, add a new pair of elements (AP and CD) that accounts for the added link characteristics and signal  power ($AP_k$) and the cumulated CD on the new link (set to zero). At the same time, update the cumulated CD along the previous link by adding $CD_k$ to the N CD values of the signal history list. (This set is made of n pairs of elements, where n is the number of nodes belonging to the transparent section.) The current node becomes $N_{t-1}$. If the current node is the destination node, go to step 9, else go to step 2.

9. Finish the signaling procedure and reserve required resources such as transponders and repeaters. Send a message to the source node for the connection set-up.

The precision of the before mentioned approach will depend on the collected information for both directions WE and EW. If approaches (1) and (2) described above are used, the minimal use of regenerators is not guaranteed because of the inaccuracy of link description. This is not the case if approach (3) described above is used; in this case, the proposed method guarantees the minimal use of regenerators and also the feasibility of both directions.

In the following, a method according to embodiments is described in detail based on an example.

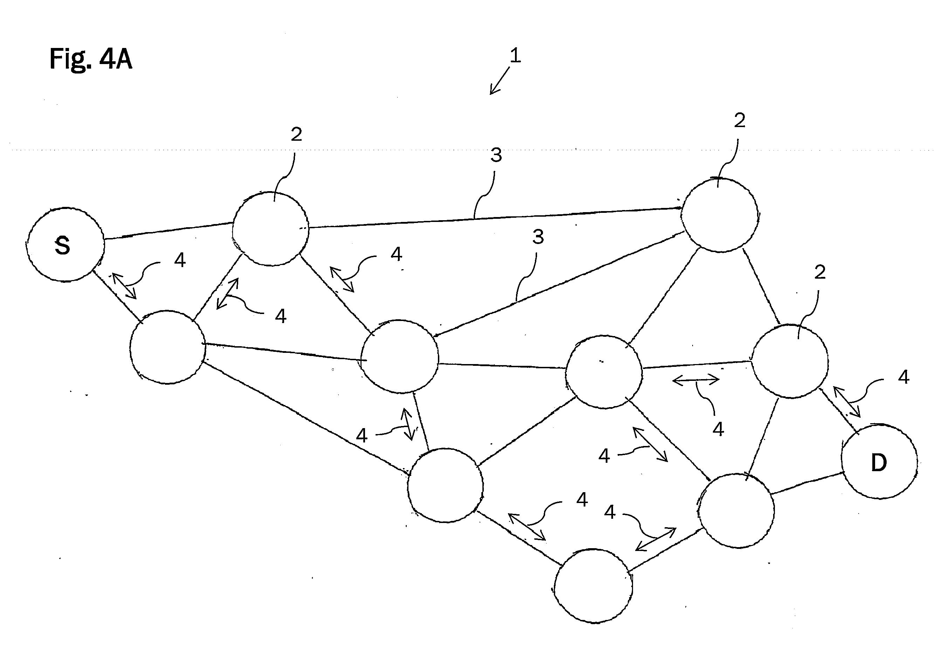

Fig. 4A illustrates a communication network 1 comprising a plurality of network nodes 2 and a plurality of optical network links 3, the network nodes 2 being connected with each other by the network links 3. In the communication network 1, a network path has been defined which comprises a network path source node S, a network path destination node D and a set of network links 3 connecting the network path source node S with the network path destination node D. Here, the network path 3 is indicated by arrows 4. The arrows 4 indicate that communication signals may propagate along the network path from the network path source node S to the network path destination node D, or vice versa.

In order to determine which of the network nodes 2 located along the network path should be repeater or regenerator nodes, a method described in the following may be used.

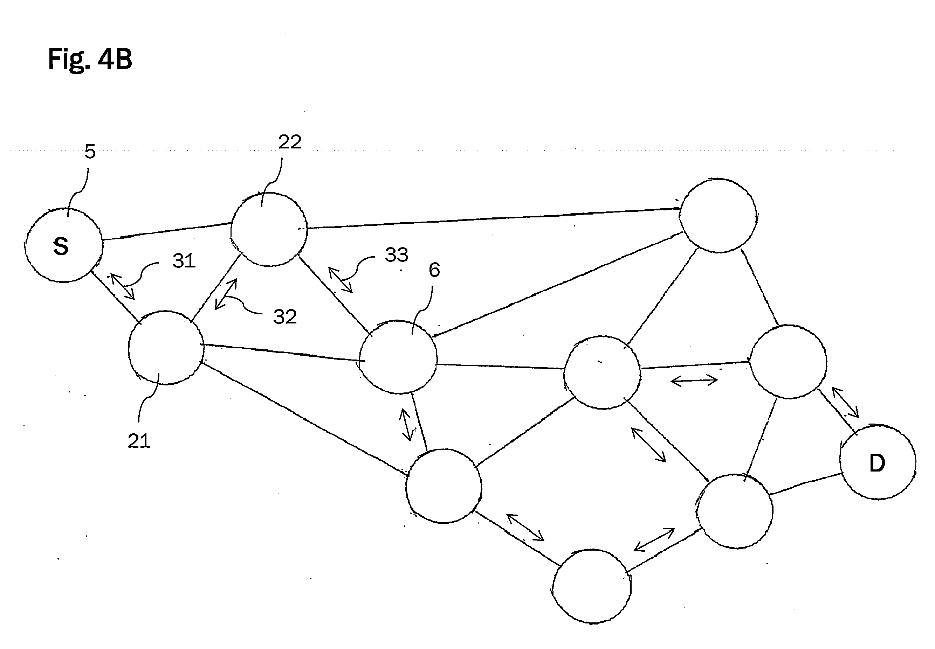

As shown in Fig. 4B, a network path subsection is defined which comprises a network path subsection starting node 5 (which in this example coincides with the network path source node S), and a network path subsection ending node 6. Further, the network path subsection comprises optical network links 31, 32, and 33. Also, the network path subsection comprises intermediate network nodes 21, 22.

In a first step, the influence of the network links 31, 32, 33 between the network path subsection starting node 5 and the network path subsection ending node 6 on a signal propagating in the reverse direction from a signaling message for resource reservation (i.e. from the network path subsection ending node 6 to the network path subsection stating node 5) is determined. In particular, it is determined whether a communication signal starting with full (a predetermined) signal strength at the network path subsection ending node 6 towards the network path subsection starting node 5 will reach the network path subsection starting node 5 while signal impairments stay within given limits (see condition 1), thereby ensuring that the signal strength does not fall below a predetermined threshold value. In other words, it is determined whether the accumulated impairments generated by the network links 33, 32, 31, in this order, exceed a predetermined threshold value, e.g. the communication signal is attenuated such that its signal strength falls below a predetermined threshold value.

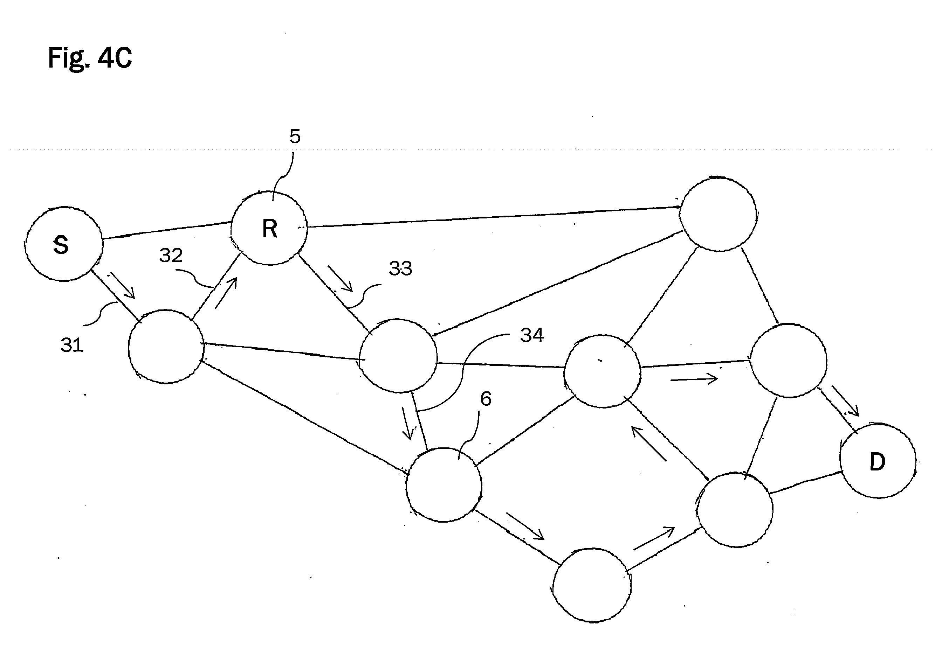

If it is determined that the accumulated impairments exceed the predetermined threshold value, then the situation as shown in Fig. 4C applies, i.e. it is determined that the node prior to the network path subsection ending node 6 is a repeater node (which is indicated by the letter "R"). As a result, repeater functionality is provided at the node 22 prior to the network path subsection ending node 6.

If the node prior to the network path subsection ending node 6 is set to be a repeater node R, then the network path destination node 6 is shifted by at least one network link 3 towards the network path destination node D, and the network path subsection starting node 5 is set to become the node prior to the network path subsection ending node 6, as shown in Fig. 4C. Here, it is assumed that the network path subsection ending node 6 is shifted by only one network link 3 towards the network path destination node D. In the situation shown in Fig. 4C, the network path subsection now comprises the network path subsection starting node 5, an intermediate node (the previous network path subsection ending node), the network path subsection ending node 6, and the network links 33 and 34.

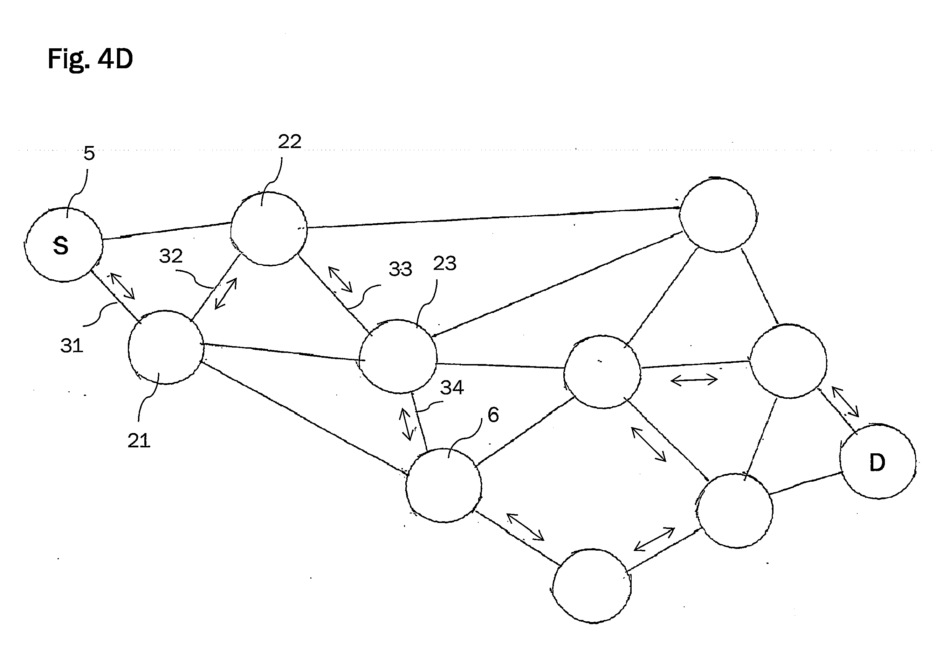

If, on the other hand, it is determined that the accumulated impairments of the network links 31, 32, 33 do not exceed the predetermined threshold value, then it is determined that the node prior to the network path subsection ending node 6 is not a repeater node, resulting in that the network path subsection starting node 5 is maintained at its current position, and the network path subsection ending node 6 is shifted by at least one network link 3 towards the network path destination node D, as shown in Fig. 4D (here, it is assumed that the network path subsection ending node 6 is shifted by only one network link 3 towards the network path destination node D). In the situation shown in Fig. 4D, the network path subsection now comprises the network path subsection starting node 5, the network path subsection ending node 6, the network links 31, 32, 33, 34, and the network nodes 21, 22, 23.

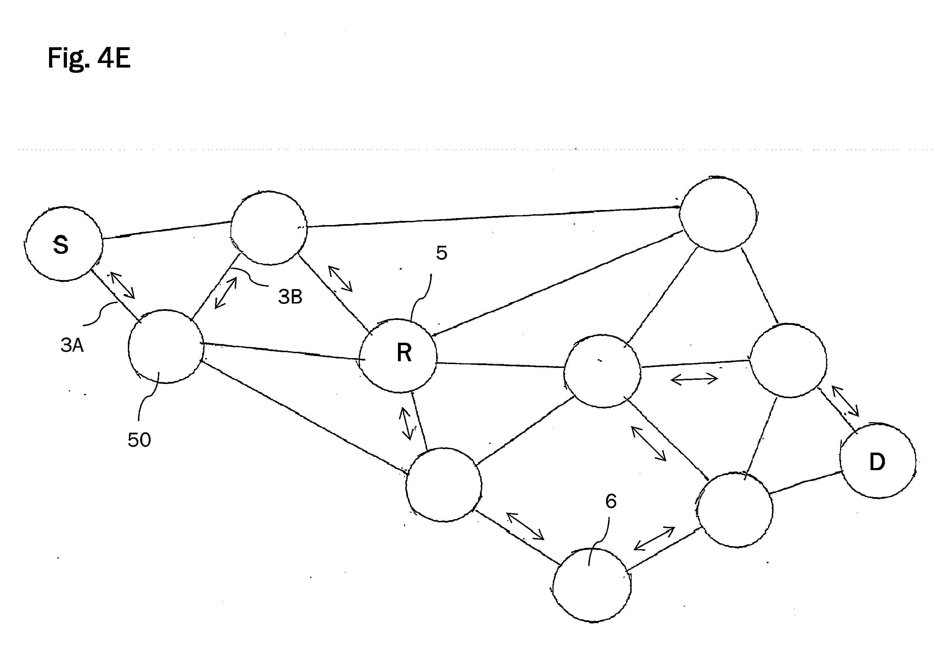

In the situation shown in Fig. 4D, i.e. in the case that the accumulated impairments do not exceed the predetermined threshold value, it is determined whether the influence of the concatenation of network links 31, 32, 33, 34 of the network path subsection newly defined on a communication signal propagating from the network path subsection ending node 6 to the network path subsection starting node 5 exceeds a predetermined threshold value. That is, it is determined whether, for a communication signal starting at full signal strength at network path sub-section ending node 6 and propagating along network links 34, 33, 32, 31 in this order, reaches the network path subsection starting node 5 with a signal strength or signal quality not falling below the predetermined signal strength value. Should the influence exceed the predetermined threshold value, i.e. should the communication signal reach the network path subsection starting node 5 with a signal strength falling below a predetermined threshold value, node 23 prior to the network path subsection ending node 6 is determined to be a repeater node R, the network path subsection ending node 6 is shifted by at least one network link towards the network path destination node D, and the network path subsection starting node 5 is set to become the new repeater node, as shown in Fig. 4E. Otherwise (i.e. should the influence not exceed the predetermined threshold value), the network path subsection starting node 5 is maintained at its current position, and the network path subsection ending node 6 is shifted by at least one network link 3 towards the network path destination node D (not shown).

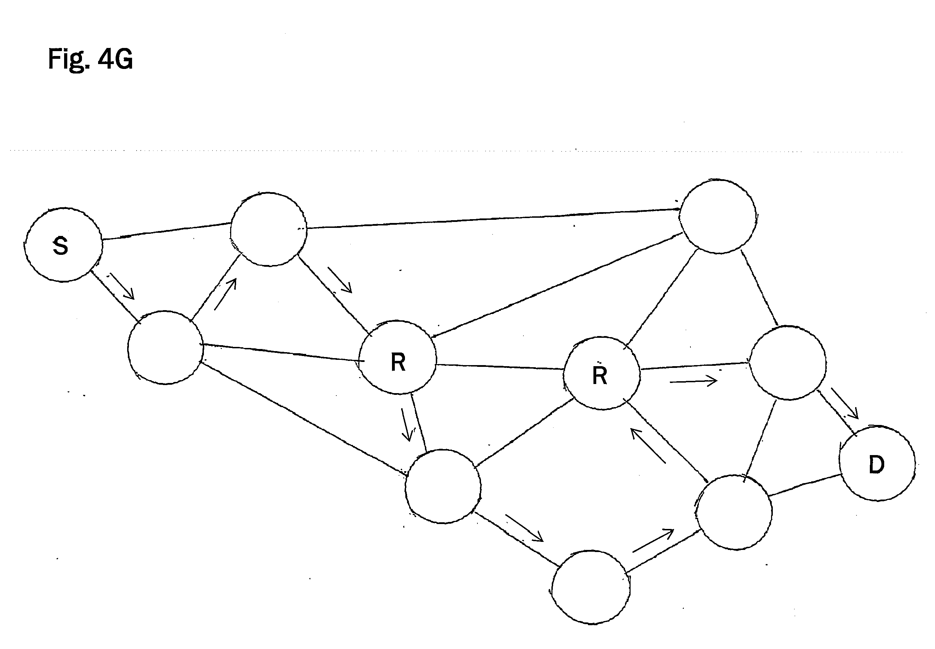

This method scheme can be repeated until the network path subsection ending node 6 coincides with the network path destination node D, as shown in Fig. 4G.

In this way, a distribution of repeater functionality over the network nodes arranged along the network path can be determined. For example, after the network path subsection ending node 6 has coincided with the network path destination node D, a distribution of repeater functionality over the network nodes arranged along the network path as shown in Fig. 4G may result. In this example, the repeater functionality of two network nodes along the network path has been enabled. It is to be noted that the distribution of repeater functionality obtained by this approach may not necessarily be the optimum distribution for a signal propagating from the network path destination node to the network path source node. However, this approach enables to determine an acceptable repeater distribution on the basis of incomplete link influence information (the link influence information regarding the network nodes between the network path subsection ending node 6 and the network path destination node D is not known when making the decision of enabling repeater functionality or not).

At the same time when carrying out the above-described steps, (i.e. when determining the influence of the network links on a communication signal propagating from the network subsection ending node towards the network path subsection starting node), the influence of the network links between the network path sub-section starting node and the network path subsection ending node on a signal propagating from the network path subsection starting node to the network path subsection ending node may be determined.

If, for example, in the state shown in Fig. 4B, it is determined that the accumulated influence of the network links 31, 32, and 33 in this order exceeds a further predetermined threshold value (which may be different from the predetermined threshold value as discussed above) on a communication signal propagating from the network path subsection starting node 5 to the network path subsection ending node 6, repeater functionality may be enabled in the node 22 prior to the network path subsection ending node 6, even if it would not be necessary for a communication signal propagating in the opposite direction, as discussed above. Also, in this case, the network path subsection ending node 6 is shifted by at least one network link 3 towards the network path destination node D. On the other hand, if it is determined that the influence does not exceed a further predetermined threshold value, no repeater needs to be placed at node 22.

If the influence of the network links on the communication signal propagating from the network subsection ending node towards the network path subsection starting node and the influence of the network links on the communication signal propagating from the network subsection starting node towards the network path sub-section ending node are simultaneously determined, and if repeater functionality is enabled within the network nodes based on the influence on both communication signals, the repeater functionality distribution may neither be optimum for the first communication signal nor optimum for the second communication signal. However, this approach enables to simultaneously determine an acceptable distribution on the basis of incomplete link influence information for both communication signals.

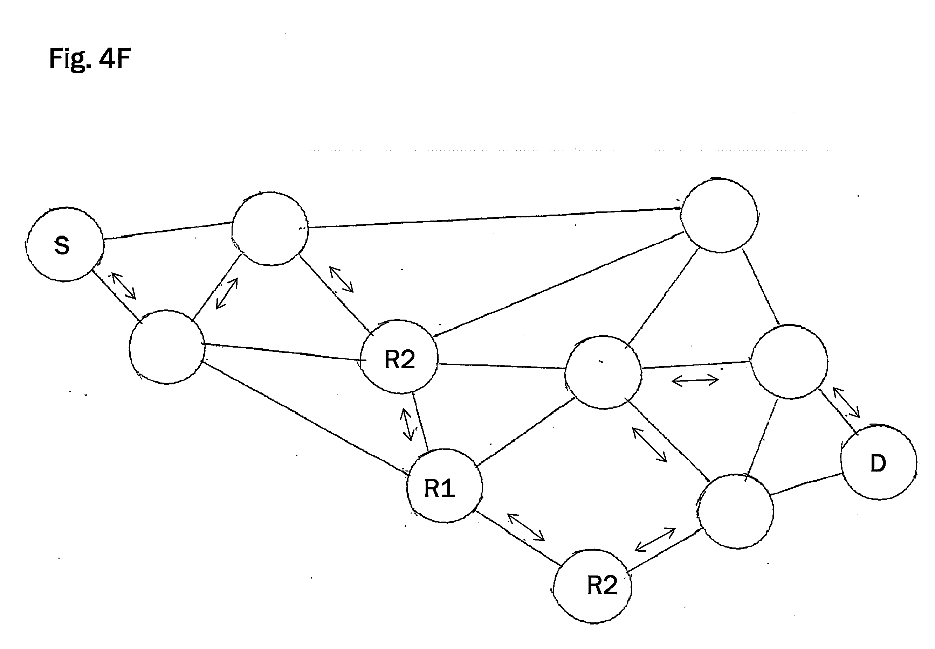

For example, if for a communication signal propagating from the network path source node S towards the network path destination node D repeating functionality R1 as shown in Fig. 4F would be sufficient, repeater functionality R2 may actually be enabled, since this may be necessary for the communication signal propagating from the network path destination node D towards the network path source node D.

Note that repeater functionality enabled acts on communication signals propagating from the network path source node S to the network path destination D, and vice versa. Further, the influence of the network links on the communication signal propagating from the network subsection ending node 6 towards the network path subsection starting node 5 and the influence of the network links on the communication signal propagating from the network subsection starting node 5 towards the network path subsection ending node 6 are simultaneously determined.

In order to determine the influence of the network links 3 between the network path subsection starting node 5 and the network path subsection ending node 6 on a signal propagating from the network path subsection ending node 6 to the network path subsection starting node 5 or propagating from the network path subsection starting node 5 to the network path subsection ending node 6, link influence information may be successively collected in a signal history list from the network nodes 2 along the network path, starting from the network path subsection starting node 5 towards the network path subsection ending node 6. For this purpose, data storage may be provided within each network node.

The determination of the influence of the network links 3 on the communication signals may be carried out each time when link influence information of a network node 2 is updated or newly read out.

The link influence information assigned to a link 3 for determining the signal impairments caused by the link may for example reflect physical properties of the link. The determination of the influence of the network links 3 on the communication signals may be calculated within the network nodes 2 itself. The link influence information may have different entries for each signal propagation direction.

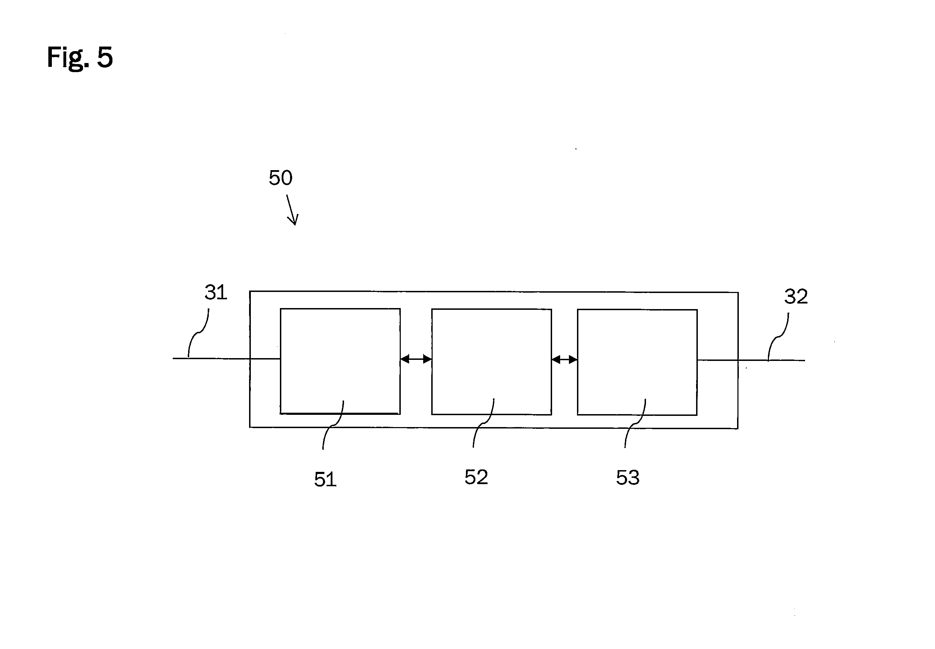

Fig. 5 shows an example of a network node 50 suitable to carry out the above described method (see Fig. 4E). The network node 50 comprises an input unit 51, a processing unit 52 coupled to the input unit 51, and an output unit 53 coupled to the processing unit 52, wherein the input unit is connectable to a first optical network link 3A (e.g. link 31), and the output unit 53 is connectable to a second optical network link 3B (e.g. link 32) of a communication network 1. The input unit 51 may be adapted to receive a control signal (also called "signaling message") from the first optical network link 3A. The control signal may comprise information which indicates a network path within the communication network 1 along which the control signal is to be routed, wherein the network node 50, the first optical network link 3A and the second optical network link 3B are part of the signal path. The control signal may comprise information which indicates an influence of network links 3 of the network path which have already been passed by the control signal but which are not directly connected to the network node, on a signal propagating along the signal path in a direction being opposite to the propagating signal of the control signal.

The processing unit 52 may be adapted to determine the influence of network link 3A of the network path directly connected to the network node 50 on a communication signal propagating along the signal path in a direction being opposite to the propagating direction of the control signal, and process the control signal by correspondingly updating the information indicating the accumulated influence. If the thus updated accumulated influence on the signal exceeds a predetermined threshold value, the processing unit 52 may determine the node prior to the network node 50 to be a repeater node R. The processing unit 52 may be adapted to process the control signal by resetting the information of the control signal indicating the accumulated influence. The output unit 53 may be adapted to output the processed control signal to the second optical network link 3B and thus send it along the network path to the next node 2 which repeats the above procedure.

The processing unit 52 may initiate enabling repeater functionality in the prior node, if necessary. Alternatively, the processing unit may indicate in the signaling message that repeater functionality is needed in the prior node and pass on the signaling message to the next node on the predetermined network path. When the signaling message reaches the destination node, complete information about all repeater nodes is available. This information can then be used to provide the necessary repeater functionality in the selected nodes. As a further alternative, the information about selected repeater nodes is propagated in separate signal(s) or message(s).

According to embodiments, the control signal may further comprise information which indicates an accumulated influence of network links 3 of the network path which have already been passed by the control signal but which are not directly connected to the network node 50, on a signal propagating along the signal path in the same direction as the control signal. The processing unit 52 may be adapted to determine the influence of a network link 3 of the network path directly connected to the network node 50, on a signal propagating along the signal path in the same direction as the control signal, and process the control signal by correspondingly updating the information indicating the accumulated influence. If the thus updated accumulated influence on the signal exceeds a further predetermined threshold value, the processing unit 52 determines the prior network node to be a repeater node R, and processes the control signal by updating the information of the control signal indicating the accumulated influence.

In the present document, a link is a succession of fiber spans (typically 30-100km each) separated by optical amplifiers bridging two network nodes, and it is relied on the common practice of describing the physical characteristics of the network on a link-by-link basis (i.e. one value of OSNR degradation, cumulated CD etc per link). The examples presented in this document consider links as transparent section elements, but the general idea can be extended for spans. If one wanted to provide a more detailed performance estimation (and thus a further reduction of margins) one could extend the proposed concept to a span-by-span description of the network and update the physical parameters every time the signal passes through a span, rather than only at the end of each link.

The present document discloses a method and a device for determining whether a node in a bidirectional optical communication network should provide signal regeneration capabilities (i.e. being a repeater node). The proposed method uses information about physical signal impairments caused by network links to estimate signal propagation feasibility in both directions for transparent sub-sections of the network. The method allows making successive and local decisions on repeater functionality while a signaling message proceeds through the network along a given path from a source node to a destination node. Impairments acting on signals propagating through a current transparent sub-section in the opposite direction to the direction in which the signaling message propagates are estimated based on a signal history list for the sub-section. The signal history list stores parameters necessary to calculate impairments caused by the optical fiber links in the sub-section, e.g. the product AP of link characteristics and signal power and the cumulated CD. The proposed method allows making repeater decisions for network nodes based on impairments for signals for both directions and with only one pass along the network path.

Advantages of embodiments are:

- Ensuring the minimal number of regenerators required for both directions; Ensuring the physical feasibility of the signals transmitted over two independent directions;
- Minimizing the set-up time of a new optical connection; Easy accounting for nonlinear impairments depending on the order of travelled fiber types, which are not the same for both directions.
- Quick set-up time for setting up a new connection in GMPLS-managed ASON; Reduction of the amount of propagated information and its process time.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above- described methods and components of described systems can be performed by programmed computers. Herein, some embodiments are also intended to cover program storage devices, e.g., digital data storage media, which are machine or computer readable and encode machine- executable or computer- executable programs of instructions, wherein said instructions perform some or all of the steps of said above- described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above- described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1.  A method of operating a communication network (1) comprising a plurality of network nodes (2) and a plurality of optical network links (3), the method comprising:

    A) defining, in a network path within the communication network (1), a network path subsection, wherein the network path comprises a network path source node (S), a network path destination node (D), and at least two of the network links (3) connecting the network path source node (S) with the network path destination node (D), and wherein the network path subsection comprises a network path subsection starting node (5), a network path subsection ending node (6), and one or more of the network links (3) connecting the network path subsection starting node (5) and the network path subsection ending node (6), wherein the network path subsection starting node (5) is located closer to the network path source node (S) than the network path subsection ending node (6);
    B) determining the influence of the network links (3) between the network path subsection starting node (5) and the network path subsection ending node (6) in the order from the network path subsection ending node (6) to the network path subsection starting node (5) on a quality of a signal propagating from the network path sub-section ending node (6) to the network path subsection starting node (5);
    C) determining whether the influence exceeds a predetermined threshold value, wherein, if it is determined that the influence exceeds the predetermined threshold value, configuring the node of the network path subsection that is prior to the network path subsection ending node (6) to perform signal regeneration.

2.  The method according to claim 1,
    wherein, if it is determined that the influence exceeds the predetermined threshold value, updating the network path subsection starting node (5) to become the node prior to the network path subsection ending node (6), and shifting the network path subsection ending node (6) by at least one network link (3) towards the network path destination node (D).

3.  The method according to claim 1,
    wherein, in step C), if it is determined that the influence does not exceed the predetermined threshold value, maintaining the network path subsection starting node (5), and shifting the network path subsection ending node (6) by at least one network link (3) towards the network path destination node (D).

4.  The method according to claim 1,
    the method further comprising:

    - determining the influence of the network links (3) between the network path subsection starting node (5) and the network path subsection ending node (6) in this order on a quality of a signal propagating from the network path subsection starting node (5) to the network path subsection ending node (6);
    - wherein, if it is determined that the influence does not exceed a further predetermined threshold value, determining that the node of the network path sub-section prior to the network path subsection ending node (6) does not perform a signal regeneration function;
    - wherein, if it is determined that the influence exceeds the further predetermined threshold value, configuring the node prior to the network path subsection ending node (6) to perform a signal regeneration function.

5.  The method according to claim 4,
    wherein the predetermined threshold value and the further predetermined threshold value are identical.

6.  The method according to claim 1,
    wherein, in step C), the number of the network links (3) by which the network path subsection ending node (6) is shifted towards the network path destination node (D) is one.

7. The method according to claim 4,
wherein, in order determine the influence of the network links (3) between the network path subsection starting node (5) and the network path subsection ending node (6) on a quality of a signal propagating from the network path subsection ending node (6) to the network path subsection starting node (5) or propagating from the network path subsection starting node (5) to the network path subsection ending node (6), link influence information is successively collected from the network nodes along the network path, starting from the network path subsection starting node (5) towards the network path subsection ending node (6).

8. The method according to claim 1,
wherein the link influence information assigned to a link reflects physical properties of the link such as signal power and chromatic dispersion in the link.

9. The method according to claim 7,
wherein the link influence information is different for each signal propagation direction.

10. A network node (50) comprising an input unit (51), a processing unit (52) coupled to the input unit, and an output unit (53) coupled to the processing unit, wherein the input unit is connectable to a first optical network link (3A), and the output unit is connectable to a second optical network link (3B) of a communication network (1), wherein the network node (50), the first optical network link (3A) and the second optical network link (3B) are part of a network path within the communication network (1) along which a control signal is to be routed signal,

   - wherein the input unit (51) is adapted to receive the control signal from the first optical network link (3A), the control signal comprising information which indicates influence of network links (3) on a subsection of the network path, which have already been passed by the control signal but which are not directly connected to the network node, on a quality of a signal propagating along the signal path in a direction being opposite to the propagating direction of the control signal;
   - wherein the processing unit (52) is adapted to determine the influence of a network link (3A, 3B) of the network path directly connected to the network node (50), on the quality of the signal propagating along the signal path in the direction being opposite to the propagating direction of the control signal, and to process the control signal by correspondingly updating the information indicating the link influence, wherein, if an accumulated influence of network subsection links on the quality of the signal exceeds a predetermined threshold value, the processing unit indicates that the previous network node on the network path subsection is to perform signal regeneration,
   - wherein the output unit (53) is adapted to output the processed control signal to the second optical network link (3B).

11. The network node (50) according to claim 10,

   - wherein the control signal comprises information which indicates an accumulated influence of network links (3) of the network path subsection which have already been passed by the control signal but which are not directly connected to the network node, on a quality of a signal propagating along the signal path in the same direction as the control signal,
   - wherein the processing unit (52) is adapted to determine the influence of a network link (3) of the network path directly connected to the network node, on the quality of the signal propagating along the signal path in the same direction as the control signal, and to process the control signal by correspondingly updating the information indicating the accumulated influence, wherein, if an accumulated influence of network links of the subsection, including the directly connected link, on the quality of the signal exceeds a further predetermined threshold value, the processing unit indicates that the previous network node of the subsection is to perform a signal regeneration function.

12. The network node (50) according to claim 10,
wherein processing the control signal includes, if the accumulated influence of network subsection links on the quality of the signal exceeds the predetermined threshold value, clearing the information of the control signal indicating the link influence and including only information which indicates the influence of the network link (3) directly connected to the network node (50).

13. The network node (50) according to claim 11,
wherein the link influence information assigned to a link reflects physical properties of the link which are necessary to calculate nonlinear impairments for both signal directions.

**14.** The network node (50) according to claim 10,
wherein the processing unit (52) is configured to send a signaling message to the prior network node of the subsection, the signaling message including instructions to perform a signal regeneration function.

**15.** A computer program product comprising computer program means adapted to carry out any method step of any one of claims 1 to 9 or adapted to embody any part of the network node of any one of claims 10 to 13 when being carried out on a computing device.


**Amended claims in accordance with Rule 137(2) EPC.**

**1.** A method of operating a communication network (1) comprising a plurality of network nodes (2) and a plurality of optical network links (3), the method comprising:

A) defining, in a network path within the communication network (1), a network path subsection, wherein the network path comprises a network path source node (S), a network path destination node (D), and at least two of the network links (3) connecting the network path source node (S) with the network path destination node (D), and wherein the network path subsection comprises a network path subsection starting node (5), a network path subsection ending node (6), and one or more of the network links (3) connecting the network path subsection starting node (5) and the network path subsection ending node (6), wherein the network path subsection starting node (5) is located closer to the network path source node (S) than the network path subsection ending node (6);
B) determining the influence of the network links (3) between the network path subsection starting node (5) and the network path subsection ending node (6) in the order from the network path subsection ending node (6) to the network path subsection starting node (5) on a quality of a signal propagating from the network path subsection ending node (6) to the network path subsection starting node (5), wherein the influence is determined based on a control signal propagating from the network path subsection starting node to the network path subsection ending node, and comprising successively updating information included in the control signal at the network nodes passed by the control signal, the information indicating the influence of network links on the subsection of the network path which have already been passed by the control signal, on the quality of the signal propagating from the network path subsection ending node (6) to the network path subsection starting node (5);
C) determining whether the influence exceeds a predetermined threshold value, wherein, if it is determined that the influence exceeds the predetermined threshold value, configuring the node of the network path subsection that is prior to the network path subsection ending node (6) to perform signal regeneration.

**2.** The method according to claim 1,
wherein, if it is determined that the influence exceeds the predetermined threshold value, updating the network path subsection starting node (5) to become the node prior to the network path subsection ending node (6), and shifting the network path subsection ending node (6) by at least one network link (3) towards the network path destination node (D).

**3.** The method according to claim 1,
wherein, in step C), if it is determined that the influence does not exceed the predetermined threshold value, maintaining the network path subsection starting node (5), and shifting the network path subsection ending node (6) by at least one network link (3) towards the network path destination node (D).

**4.** The method according to claim 1,
the method further comprising:

- determining the influence of the network links (3) between the network path subsection starting node (5) and the network path subsection ending node (6) in this order on a quality of a signal propagating from the network path subsection starting node (5) to the network path subsection ending node (6);
- wherein, if it is determined that the influence does not exceed a further predetermined threshold value, determining that the node of the network path subsection prior to the network path subsection ending node (6) does not perform a signal regeneration function;
- wherein, if it is determined that the influence exceeds the further predetermined threshold value, configuring the node prior to the network path subsection ending node (6) to perform a signal regeneration function.

**5.** The method according to claim 4,
wherein the predetermined threshold value and the further predetermined threshold value are identical.

**6.** The method according to claim 1,
wherein, in step C), the number of the network links (3) by which the network path subsection ending node (6) is shifted towards the network path destination node (D) is one.

**7.** The method according to claim 4,
wherein, in order determine the influence of the network links (3) between the network path subsection starting node (5) and the network path subsection ending node (6) on a quality of a signal propagating from the network path subsection ending node (6) to the network path subsection starting node (5) or propagating from the network path subsection starting node (5) to the network path subsection ending node (6), link influence information is successively collected from the network nodes along the network path, starting from the network path subsection starting node (5) towards the network path subsection ending node (6).

**8.** The method according to claim 1,
wherein the link influence information assigned to a link reflects physical properties of the link such as signal power and chromatic dispersion in the link.

**9.** The method according to claim 7,
wherein the link influence information is different for each signal propagation direction.

**10.** A network node (50) comprising an input unit (51), a processing unit (52) coupled to the input unit, and an output unit (53) coupled to the processing unit, wherein the input unit is connectable to a first optical network link (3A) and the output unit is connectable to a second optical network link (3B) of a communication network (1), wherein the network node (50), the first optical network link (3A) and the second optical network link (3B) are part of a network path within the communication network (1) along which a control signal is to be routed,

- wherein the input unit (51) is adapted to receive the control signal from the first optical network link (3A), the control signal comprising information which indicates influence of network links (3) on a subsection of the network path, which have already been passed by the control signal but which are not directly connected to the network node, on a quality of a signal propagating along the signal path in a direction being opposite to the propagating direction of the control signal;
- the processing unit (52) is adapted to determine the influence of a network link (3A, 3B) of the network path directly connected to the network node (50), on the quality of the signal propagating along the signal path in the direction being opposite to the propagating direction of the control signal, and to process the control signal by correspondingly updating the information indicating the link influence, wherein, if an accumulated influence of network subsection links on the quality of the signal exceeds a predetermined threshold value, the processing unit indicates that the previous network node on the network path subsection is to perform signal regeneration,
- wherein the output unit (53) is adapted to output the processed control signal to the second optical network link (3B).

**11.** The network node (50) according to claim 10,

- wherein the control signal comprises information which indicates an accumulated influence of network links (3) of the network path subsection which have already been passed by the control signal but which are not directly connected to the network node, on a quality of a signal propagating along the signal path in the same direction as the control signal,
- wherein the processing unit (52) is adapted to determine the influence of a network link (3) of the network path directly connected to the network node, on the quality of the signal propagating along the signal path in the same direction as the control signal, and to process the control signal by correspondingly updating the information indicating the accumulated influence, wherein, if an accumulated influence of network links of the subsection, including the directly connected link, on the quality of the signal exceeds a further predetermined threshold value, the processing unit indicates that the previous network node of the subsection is to perform a signal regeneration function.

**12.** The network node (50) according to claim 10,
wherein processing the control signal includes, if the accumulated influence of network subsection links on the quality of the signal exceeds the predetermined threshold value, clearing the information of the control signal indicating the link influence and including only information which indicates the influence of the network link (3) directly connected to the network node (50).

**13.** The network node (50) according to claim 11,
wherein the link influence information assigned to a link reflects physical properties of the link which are necessary to calculate nonlinear impairments for both signal directions.

**14.** The network node (50) according to claim 10,
wherein the processing unit (52) is configured to send a signaling message to the prior network node of the subsection, the signaling message including instructions to perform a signal regeneration function.

**15.** A computer program product comprising computer program means adapted to carry out any method step of any one of claims 1 to 9 or adapted to embody any part of the network node of any one of claims 10 to 13 when being carried out on a computing device.

Fig. 1

Fig. 2

History direction WE

| $0$ | $CD_1$ | $CD_1+CD_2$ |
| $0$ | $NL_1$ | $NL_1+NL_2$ |

S   $N_2$   $N_3$   D

History direction EW

| $CD_3+CD_2$ | $CD_3$ | $0$ |
| $NL_3+NL_2$ | $NL_3$ | $0$ |

Fig. 3

EP 2 642 677 A1

**Fig. 4A**

1

2

3

3

2

S

4

4

4

4

2

4

4

4

4

4

4

D

2

# Fig. 4B

EP 2 642 677 A1

Fig. 4C

Fig. 4D

EP 2 642 677 A1

Fig. 4E

EP 2 642 677 A1

Fig. 4F

Fig. 4G

# Fig. 5

Europäisches
Patentamt

European
Patent Office

Office européen
des brevets

## EUROPEAN SEARCH REPORT

**Application Number**

EP 12 30 5344

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GANGXIANG SHEN ET AL: "Impairment-Aware Lightpath Routing and Regenerator Placement in Optical Transport Networks With Physical-Layer Heterogeneity", JOURNAL OF LIGHTWAVE TECHNOLOGY, IEEE SERVICE CENTER, NEW YORK, NY, US, vol. 29, no. 18, 1 September 2011 (2011-09-01), pages 2853-2860, XP011359077, ISSN: 0733-8724, DOI: 10.1109/JLT.2011.2162939 * page 2853, left-hand column, paragraph 1 - page 2854, left-hand column, paragraph 3 * * page 2855, right-hand column, paragraph 2 - page 2856, right-hand column, paragraph 2; figure 2 * ----- | 1-15 | INV. H04J14/02 |
| X | XI YANG ET AL: "Sparse Regeneration in Translucent Wavelength-Routed Optical Networks: Architecture, Network Design and Wavelength Routing", PHOTONIC NETWORK COMMUNICATIONS, KLUWER ACADEMIC PUBLISHERS, BO, vol. 10, no. 1, 1 July 2005 (2005-07-01), pages 39-53, XP019214434, ISSN: 1572-8188, DOI: 10.1007/S11107-005-1694-Y * page 39, left-hand column, paragraph 1 - page 40, right-hand column, paragraph 3 * * page 44, right-hand column, paragraph 3 - page 46, left-hand column, paragraph 1 * * page 46, right-hand column, paragraph 7 - page 51, left-hand column, paragraph 1; figures 4,5 * ----- | 1-15 | **TECHNICAL FIELDS SEARCHED (IPC)**<br><br>H04J |

The present search report has been drawn up for all claims

| Place of search | Date of completion of the search | Examiner |
|---|---|---|
| The Hague | 6 September 2012 | Roldán Andrade, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)